# EUROPEAN PATENT APPLICATION

(11) **EP 4 748 881 A1**
(43) Date of publication of application: **27.05.2026**
(21) Application number: 25757772.6
(22) Date of filing: 19.02.2025
(51) Int. Cl.: C08L 9/00, B60C 1/00, C08K 3/013, C08K 5/548, C08K 13/02, C08L 83/04

(54) **COMPOUNDING AGENT FOR DIENE RUBBERS AND RUBBER COMPOSITION**

(30) Priority: 20.02.2024 JP 2024023307; 12.09.2024 JP 2024157991
(71) Applicant: SHIN-ETSU CHEMICAL CO., LTD., Tokyo 100-0005 (JP)
(72) Inventor: HIROKAMI, Munenao, Annaka-shi, Gunma 379-0224 (JP); OKUNO, Hirohito, Annaka-shi, Gunma 379-0224 (JP); KIMURA, Tsuneo, Annaka-shi, Gunma 379-0224 (JP); IRIFUNE, Shinji, Annaka-shi, Gunma 379-0224 (JP); NAKAMURA, Tsutomu, Tokyo 100-0005 (JP); YANO, Masashi, Sayama-shi, Saitama 350-1302 (JP)
(74) Representative: Ter Meer Steinmeister & Partner
(86) International application number: PCT/JP2025/005543
(87) International publication number: WO 2025/178047

(57) **Abstract**

(A) A compounding agent for diene rubbers containing a silicone resin represented by formula (1) can, when added to a rubber composition, provide a rubber composition that can achieve desired hardness, tensile properties and durability without deteriorating processability, abrasion resistance and low fuel consumption performance of the composition.

Formula (1): (SiO_{4/2})ₐ(R¹SiO_{3/2})_{b}(R¹₂SiO_{2/2})_{c}(R¹₃SiO_{1/2})_{d}(R²O_{1/2})ₑ ,

wherein in the formula, each R¹ independently represents a C1-8 alkyl, aralkyl or aryl group which may be substituted with a hydrogen atom or a halogen atom; at least 50 mol% of R¹ is a methyl group; R² represents a hydrogen atom, a methyl group, an ethyl group, a n-propyl group, an i-propyl group or an acetyl group; at least 20 mol% of R² is a hydrogen atom; a, b, c and d are numbers satisfying 0 ≤ a < 1, 0 < b ≤ 1, 0 ≤ c < 1, 0 ≤ d < 1 and a+b+c+d = 1; and e is a number satisfying 0 ≤ e ≤ 2.

## Description

### TECHNICAL FIELD

The present invention relates to a compounding ingredient for diene rubbers and to a rubber composition.

### BACKGROUND ART

Silica-filled tires have an excellent performance in automotive applications; in particular, the wear resistance, rolling resistance and wet grip are outstanding. Improvements in these performances are closely associated with improvement in the fuel efficiency of a tire and so are under active investigation lately, particularly in the field of automotive tires that use solution-polymerized styrene-butadiene rubber (S-SBR).

Silica-filled rubber compositions reduce the rolling resistance of tires and improve their wet grip, but such compositions have a high viscosity when unvulcanized and thus require multi-stage milling, which is a drawback in terms of workability.

Hence, in rubber compositions that have been simply compounded with an inorganic filler such as silica, dispersion of the filler is inadequate, leading to major decreases in fracture strength and wear resistance. Sulfur-containing organosilicon compounds have been essential for improving the dispersibility of inorganic fillers in rubber and also for inducing the fillers to chemically bond with the rubber matrix.

Compounds which include an alkoxysilyl group and a polysulfide silyl group in the molecule, such as bis(triethoxysilylpropyl)tetrasulfide and bis(triethoxysilylpropyl)disulfide, are known to be effective sulfur-containing organosilicon compounds for use as rubber compounding ingredients (see Patent Documents 1 to 4).

Various alkoxysilyl group-containing compounds have been developed in order to increase the dispersibility of silica as an inorganic filler and improve the low fuel consumption properties. However, although the low fuel consumption properties do improve, the hardness and the tensile properties do not increase. Accordingly, there exists a desire for a material which improves the hardness and tensile properties without worsening the processability and the low fuel consumption properties.

In this connection, Patent Document 5 discloses a method which, by adding a silanol group-containing silicone resin to an organic elastomer, increases the hardness and the tensile properties. However, even further improvements in the hardness, tensile characteristics and durability are desired.

### PRIOR ART DOCUMENTS

### PATENT DOCUMENTS

Patent Document 1: JP-A 2004-525230
Patent Document 2: JP-A 2004-18511
Patent Document 3: JP-A 2002-145890
Patent Document 4: JP-A 2000-103795
Patent Document 5: JP-A 2011-504956

### SUMMARY OF INVENTION

### TECHNICAL PROBLEM

The present invention was arrived at in light of the above circumstances. An object of the invention is to provide a rubber compounding ingredient which, when added to a rubber composition, gives a rubber composition that can achieve the desired hardness, tensile characteristics and durability without worsening the processability, wear resistance and low fuel consumption performance of the composition. Further objects are to provide a rubber composition arrived at by including this rubber compounding ingredient, and a tire formed from this rubber composition.

### SOLUTION TO PROBLEM

The inventors have conducted intensive investigations aimed at achieving the above objects. As a result, they have discovered that specific silicone resins are suitable as rubber compounding ingredients and that tires obtained from rubber compositions containing such rubber compounding ingredients are able to achieve the desired hardness, tensile characteristics and durability without worsening the processability, wear resistance and low fuel consumption performance of the composition. This discovery ultimately led to the present invention.

Accordingly, this invention provides:
1. A compounding ingredient for diene rubber, which compounding ingredient includes (A) a silicone resin of formula (1) below

   (SiO_{4/2})ₐ(R¹SiO_{3/2})_{b}(R¹₂SiO_{2/2})_{c}(R¹₃SiO_{1/2})_{d}(R²O_{1/2})ₑ (1)

   (wherein each R¹ is independently a hydrogen atom or an alkyl group of 1 to 8 carbon atoms, aralkyl group or aryl group which may be substituted with a halogen atom, at least 50 mol% of the occurrences of R¹ being methyl groups; R² is a hydrogen atom, methyl group, ethyl group, n-propyl group, i-propyl group or acetyl group, at least 20 mol% of the occurrences of R² being hydrogen atoms; a, b, c and d are numbers which satisfy the conditions 0 ≤ a < 1, 0 < b ≤ 1, 0 ≤ c < 1, 0 ≤ d < 1 and a+b+c+d = 1; and e is a number which satisfies the condition 0 ≤ e ≤ 2);
2. The diene rubber compounding ingredient of 1 above, wherein b is a number which satisfies the condition 0.4 ≤ b ≤ 1;
3. The diene rubber compounding ingredient of 2 above, wherein b is 1;
4. The diene rubber compounding ingredient of 1 above, wherein the silicone resin is a solid at 25°C;
5. The diene rubber compounding ingredient of any of 1 to 4 above, further including (B) an organosilicon compound having one or more type of group selected from polysulfide, thioester and mercapto groups, and having an alkoxysilyl group;
6. A rubber composition which includes:
   (A) a silicone resin of formula (1) below

      (SiO_{4/2})ₐ(R¹SiO_{3/2})_{b}(R¹₂SiO_{2/2})_{c}(R¹₃SiO_{1/2})_{d}(R²O_{1/2})ₑ (1)

      (wherein each R¹ is independently a hydrogen atom or an alkyl group of 1 to 8 carbon atoms, aralkyl group or aryl group which may be substituted with a halogen atom, at least 50 mol% of the occurrences of R¹ being methyl groups; R² is a hydrogen atom, methyl group, ethyl group, n-propyl group, i-propyl group or acetyl group, at least 20 mol% of the occurrences of R² being hydrogen atoms; a, b, c and d are numbers which satisfy the conditions 0 ≤ a < 1, 0 < b ≤ 1, 0 ≤ c < 1, 0 ≤ d < 1 and a+b+c+d = 1; and e is a number which satisfies the condition 0 ≤ e ≤ 2),
   (B) an organosilicon compound having one or more type of group selected from polysulfide, thioester and mercapto groups, and having an alkoxysilyl group,
   (C) a diene rubber, and
   (D) an inorganic filler; and
7. A tire obtained by molding the rubber composition of 6 above.

### ADVANTAGEOUS EFFECTS OF INVENTION

Rubber compositions which include the rubber compounding ingredient of the invention have an excellent processability, and tires formed using these rubber compositions are able to achieve the desired hardness, tensile characteristics and durability without worsening the wear resistance and low fuel consumption performance.

### DESCRIPTION OF EMBODIMENTS

The invention is described in detail below.

### [Rubber Compounding Ingredient]

The rubber compounding ingredient of the invention includes component (A) below.

### (A) Silicone Resin

Component (A) is a silicone resin having the constitutional unit ratio indicated in formula (1) below

(SiO_{4/2})ₐ(R¹SiO_{3/2})_{b}(R¹₂SiO_{2/2})_{c}(R¹₃SiO_{1/2})_{d}(R²O_{1/2})ₑ (1)

In formula (1), each R¹ is independently a hydrogen atom or an alkyl group of 1 to 8 carbon atoms, aralkyl group or aryl group which may be substituted with a halogen atom.

The alkyl group of 1 to 8 carbon atoms represented by R¹ may be linear, branched or cyclic. Specific examples include methyl, ethyl, n-propyl, isopropyl, n-butyl, i-butyl, tert-butyl, neopentyl, n-hexyl, cyclohexyl, n-heptyl and n-octyl groups. Alkyl groups of 1 to 3 carbon atoms are preferred, with methyl, ethyl and propyl groups being more preferred.

The aralkyl group is preferably an aralkyl group of 7 to 20 carbon atoms, specific examples of which include benzyl and phenylethyl groups.

The aryl group is preferably an aryl group of 6 to 18 carbon atoms, specific examples of which include unsubstituted aryl groups, such as phenyl and naphthyl groups, and alkylaryl groups of 7 to 18 carbon atoms, such as tolyl, xylyl, ethylphenyl, propylphenyl, butylphenyl, pentylphenyl, hexylphenyl, heptylphenyl, octylphenyl, nonylphenyl, decylphenyl, undecylphenyl and dodecylphenyl groups. A phenyl group is preferred.

In formula (1), at least 50 mol% of the occurrences of R¹ are methyl groups, preferably 60 to 100 mol% are methyl groups, and even more preferably 80 to 100 mol% are methyl groups. When less than 50 mol% of the occurrences of R¹ are methyl groups, properties such as the hardness, tensile characteristics and durability of the rubber are inferior. In cases where the content of methyl groups is less than 100 mol%, ethyl, n-propyl, isopropyl and phenyl groups are preferred as the other groups.

Some or all of the hydrogen atoms on the above alkyl, aralkyl and aryl groups may be substituted with halogen atoms (fluorine, chlorine, bromine and iodine atoms). Specific examples of these groups substituted in this way include chloromethyl, chloropropyl, bromoethyl, trifluoropropyl, chlorophenyl and bromophenyl groups.

In formula (1), R² represents a hydrogen atom, methyl group, ethyl group, n-propyl group, i-propyl group or acetyl group. Of these, a hydrogen atom is preferred. At least 20 mol% of the occurrences of R² are hydrogen atoms, preferably at least 50 mol% are hydrogen atoms, and more preferably at least 60 mol% are hydrogen atoms.

The subscripts a, b, c and d are numbers which satisfy the conditions 0 ≤ a < 1, 0 < b ≤ 1, 0 ≤ c < 1, 0 ≤ d < 1 and a+b+c+d = 1.

To improve the rubber properties, i.e., the hardness, tensile characteristics and durability, it is necessary for 0 < b ≤ 1, preferable for 0.4 ≤ b ≤ 1, more preferable for 0.6 ≤ b ≤ 1, and even more preferable for b = 1.

Also, e is a number that satisfies the condition 0 ≤ e ≤ 2. To improve the hardness, tensile characteristics and durability of the rubber, it is preferable for 0.05 ≤ e ≤ 1, and more preferable for 0.10 ≤ e ≤ 1.

In the rubber compounding ingredient of the invention, the silicone resin (A) may consist entirely of a single compound or may be a mixture of a plurality of differing compounds.

The weight-average molecular weight of the silicone resin (A) of the invention is not particularly limited, although the polystyrene-equivalent weight-average molecular weight, as determined by gel permeation chromatography (GPC), is preferably from 500 to 500,000, and more preferably from 1,000 to 300,000. At a weight-average molecular weight of less than 500, the hardness and tensile characteristics may not improve.

The silicone resin (A) is preferably a solid at 25°C. The fact that it is a solid facilitates mixture in the tire composition.

The softening point of the silicone resin (A) is preferably between 60°C and 120°C. The softening point is a value measured by the ring and ball method in accordance with JIS K2207: 2006.

From the standpoint of safety during kneading of the rubber composition, the silicone resin (A) has a nonvolatile content (excluding solvents and the like) of preferably at least 95 wt%.

### Component (B)

In addition to above component (A), an organosilicon compound (B) having one or more type of group selected from polysulfide, thioester and mercapto groups and having an alkoxysilyl group may be used in the rubber compounding ingredient of the invention.

Component (B) is not particularly limited, provided that it is a functional group-containing compound such as this. Use can be made of, for example, any conventional known silane coupling agent that is compounded in rubber compositions for tires and other applications.

Specific examples of such silane coupling agents include polysulfide-type organosilicon compounds such as bis(3-bistriethoxysilylpropyl)tetrasulfide and bis(3-bistriethoxysilylpropyl)disulfide; mercapto-type organosilicon compounds such as 3-mercaptopropyltrimethoxysilane and 3-mercaptopropyltriethoxysilane; and thioester-type organosilicon compounds such as 3-octanoylthiopropyltriethoxysilane and 3-propionylthiopropyltrimethoxysilane.

Use can also be made of, for example, the reaction product of the above sulfur atom-containing organosilicon compound and a polyether group-containing alcohol, hydrolytic condensates of these organosilicon compounds, and co-hydrolytic condensates of these organosilicon compounds with another organosilicon compound having an alkoxysilyl group.

Component (B) may be a single compound used alone, or two or more such compounds may be used together.

When the rubber compounding ingredient of the invention includes component (B), the compounding ratio of component (A) and component (B) is not particularly limited, although the weight ratio (B)/(A) is preferably from 10/90 to 95/5, and more preferably from 30/70 to 95/5.

A composition containing the silicone resin (A) of the invention may be used directly as the rubber compounding ingredient or a mixture of this composition with at least one type of powder may be used as the rubber compounding ingredient.

Specific examples of the powder include carbon black, talc, calcium carbonate, stearic acid, silica, aluminum hydroxide, alumina and magnesium hydroxide.

Of these, from the standpoint of the reinforcing properties, silica and aluminum hydroxide are preferred; silica is more preferred.

In cases where a powder is used, taking into account, for example, the handleability of the rubber compounding ingredient and transportation costs, the amount included is such that the weight ratio of (X) the amount of component (A) or, in cases where component (B) is included, the combined amount of components (A) and (B), to (Y) the total amount of powder, this ratio being expressed as (X)/(Y), is preferably from 70/30 to 5/95.

The rubber compounding ingredient of the invention may be one that has been mixed with an organic polymer or rubber, such as a fatty acid, fatty acid salt, polyethylene, polypropylene, polyoxyalkylene, polyester, polyurethane, polystyrene, polybutadiene, polyisoprene, natural rubber or styrene-butadiene copolymer, and may even be one in which any of various types of additives commonly used in tire and other common rubber applications, such as vulcanizing agents, crosslinking agents, vulcanization accelerators, crosslinking accelerators, various types of oils, antioxidants, fillers and plasticizers have been included.

The rubber compounding ingredient may be in the form of a liquid or a solid and, moreover, may be diluted or emulsified in an organic solvent.

### [Rubber Composition]

The rubber composition of the invention includes above component (A), above component (B), which is an alkoxysilyl group-containing organosilicon compound, (C) a diene rubber and (D) an inorganic filler.

Taking into account, for example, the physical properties of the rubber to be obtained and the balance between the degree of the effects to be manifested and economic considerations, components (A) and (B) in the rubber composition of the invention are included in amounts of preferably 0.1 to 20 parts by weight, more preferably 0.5 to 10 parts by weight, of component (A) and preferably 1 to 30 parts by weight, more preferably 5 to 20 parts by weight, of component (B) per 100 parts by weight of subsequently described component (D).

### Component (C)

Any rubber that has hitherto been commonly used in various rubber compositions may be used as the diene rubber of component (C). Specific examples include diene rubbers such as natural rubbers and various other isoprene rubbers (IR), various styrene-butadiene copolymer rubbers (SBR), various polybutadiene rubbers (BR) and acrylonitrile-butadiene copolymer rubbers (NBR). These may be of one type used alone, or two or more types may be used in combination.

A non-diene rubber such as butyl rubber (IIR) or an ethylene-propylene copolymer rubber (EPR, EPDM) may be used together with the diene rubber.

### Component (D)

The inorganic filler serving as component (D) is exemplified by substances that are commonly used in the tire industry, such as silica, carbon black, aluminum hydroxide, alumina (aluminum oxide), calcium carbonate, talc and clay. These may be of one type used alone, or two or more may be used in combination.

Of these, the rubber composition of the invention preferably includes silica and carbon black.

Examples of carbon blacks include common ones in the tire industry, such as GPF, FEF, HAF, ISAF and SAF.

Examples of silicas include common ones in the tire industry, such as silicas prepared by dry processes (anhydrous silica) and silicas prepared by wet processes (hydrous silica). Of these, silicas prepared by wet processes are preferred because they have many silanol groups.

Silicas having a nitrogen adsorption specific surface area (N₂SA) of 70 m²/g or more are especially preferred. Although there is no particular N₂SA upper limit, from the standpoint of handleability, the N₂SA is preferably 500 m²/g or less, and more preferably 400 m²/g or less.

From the standpoint of, for example, the dispersibility, low fuel consumption properties and molding processability, the amount of component (D) included in the rubber composition of the invention is preferably from 5 to 200 parts by weight, more preferably from 10 to 150 parts by weight, and even more preferably from 20 to 130 parts by weight, per 100 parts by weight of component (C).

In addition to above components (A) to (D), various additives commonly included in tires and other rubber applications, such as sulfur, crosslinking agents, vulcanization accelerators, crosslinking accelerators, various oils, antioxidants, plasticizers, various resins, waxes and zinc oxide, may be included in the rubber composition of the invention. These additives may be included in amounts commonly used in the prior art, insofar as doing so does not detract from the objects of the invention.

The sulfur is exemplified by sulfur powder, precipitated sulfur, colloidal sulfur, insoluble sulfur, high dispersing sulfur and soluble sulfur which are commonly used in the rubber industry. One of these may be used alone, or two or more may be used in combination. Examples of these sulfurs that may be used include products available from Tsurumi Chemical Industry Co., Ltd., Karuizawa Io KK, Shikoku Chemicals Corporation, Flexsys America, Nippon Kanryu Industry Co., Ltd. and Hosoi Chemical Industry Co., Ltd.

When sulfur is included, the amount thereof per 100 parts by weight of component (C) is preferably at least 0.1 part by weight and not more than 5.0 parts by weight, more preferably at least 0.3 part by weight and not more than 3.0 parts by weight, and even more preferably at least 0.5 part by weight and not more than 2.0 parts by weight. Within this range, the balance of tensile properties and wear resistance is good.

### [Rubber Product (Tire)]

The rubber composition of the invention can be prepared from above components (A) to (D) and other ingredients by an ordinary process and can be used, by vulcanization or crosslinking of the composition, in the production of rubber products such as tires. In particular, when producing tires, it is preferable for the rubber composition of the invention to be used in the tire treads.

Tires obtained using the rubber composition of the invention have a reduced rolling resistance, in addition to which the wear resistance is improved, enabling the desired fuel efficiency to be achieved. The durability is also excellent.

The tire may have a commonly known construction, and the production process may be a commonly known process. When the tire is a pneumatic tire, typically air, air having a controlled oxygen partial pressure, or an inert gas such as nitrogen, argon or helium may be used as the air that fills the interior of the tire.

### EXAMPLES

The invention is illustrated more fully below by way of Examples and Comparative Examples, although the invention is not limited by these Examples.

### [Examples 1-1 to 1-6, Comparative Examples 1-1 to 1-5]

The natural rubber shown in Table 1 was kneaded for 60 seconds using a four-liter internal mixer (MIXTRON, from Kobe Steel, Ltd.).

Next, the carbon black, silica, silicone resin, stearic acid, antioxidant, resin and wax shown in Table 1 were added and the internal temperature was raised to 150°C, following which the contents of the mixer were discharged. This material was then stretched using rolls. The resulting rubber composition was again kneaded using an internal mixer (MIXTRON, from Kobe Steel, Ltd.) until the internal temperature reached 145°C and then discharged, following which it was stretched using rolls. The zinc oxide, vulcanization accelerator and sulfur shown in Table 1 were then added and kneading was carried out, giving the rubber composition.

| | |
|---|---|
| Natural rubber: | RSS#3 |
| Carbon black: | Seast 9H (Tokai Carbon Co., Ltd.) |
| Silica: | Nipsil AQ (Tosoh Silica Corporation) |
| Sulfide silane: | KBE-846 (Shin-Etsu Chemical Co., Ltd.; bis(triethoxysilylpropyl)tetrasulfide) |
| Silicone resin (A-1): | A silicone resin of the formula (R¹SiO_{3/2})_{1.00}(R²O_{1/2})_{0.21}, wherein R¹ represents methyl groups (100 mol%) and R² represents hydrogen atoms (60 mol%) and methyl groups (40 mol%); the resin has a weight-average molecular weight of 3,000, a softening point of 75°C and is a solid at 25°C |
| Silicone resin (A-2): | A silicone resin of the formula (R¹SiO_{3/2})_{1.00}(R²O_{1/2})_{0.12}, wherein R¹ represents methyl groups (80 mol%) and phenyl groups (20 mol%) and R² represents hydrogen atoms |
| | (60 mol%) and methyl groups (40 mol%); the resin has a weight-average molecular weight of 3,500, a softening point of 77°C and is a solid at 25°C |
| Silicone resin (A-3): | A silicone resin of the formula (R¹SiO_{3/2})_{1.00}(R²O_{1/2})_{0.12}, wherein R¹ represents methyl groups (80 mol%) and n-propyl groups (20 mol%) and R² represents hydrogen atoms (60 mol%) and methyl groups (40 mol%); the resin has a weight-average molecular weight of 3,500, a softening point of 77°C and is a solid at 25°C |
| Silicone resin (A-4): | A silicone resin of the formula (R¹SiO_{3/2})_{1.00}(R²O_{1/2})_{0.12}, wherein R¹ represents methyl groups (60 mol%) and phenyl groups (40 mol%) and R² represents atoms (60 mol%) and methyl groups (40 mol%); the resin has a weight-average molecular weight of 3,700, a softening point of 79°C and is a solid at 25°C |
| Silicone resin (A-5): | A silicone resin of the formula (R¹SiO_{3/2})_{1.00}(R²O_{1/2})_{0.12}, wherein R¹ represents methyl groups (40 mol%) and phenyl groups (60 mol%) and R² represents hydrogen atoms (60 mol%) and methyl groups (40 mol%); the resin has a weight-average molecular weight of 3,700, a softening point of 79°C and is a solid at 25°C |
| Silicone resin (A-6): | A silicone resin of the formula (R¹SiO_{3/2})_{1.00}(R²O_{1/2})_{0.61}, wherein R¹ represents phenyl groups (70 mol%) and n-propyl groups (30 mol%) and R² represents hydrogen atoms (60 mol%) and methyl groups (40 mol%); the resin has a weight-average molecular weight of 4,500, a softening point of 75°C and is a solid at 25°C |
| Silicone resin (A-7): | A silicone resin of the formula (R¹SiO_{3/2})_{1.00}(R²O_{1/2})_{0.12}, wherein R¹ represents n-propyl groups (100 mol%) and R² represents hydrogen atoms (60 mol%) and methyl groups |
| | (40 mol%); the resin has a weight-average molecular weight of 3,000, a softening point of 70°C and is a solid at 25°C |
| Silicone resin (A-8): | A silicone resin of the formula (R¹SiO_{3/2})_{1.00}(R²O_{1/2})_{0.12}, wherein R¹ represents methyl groups (80 mol%) and phenyl groups (20 mol%) and R² represents hydrogen atoms (10 mol%) and methyl groups (90 mol%); the resin has a weight-average molecular weight of 3,500, a softening point of 77°C and is a solid at 25°C |
| Silicone resin (A-9): | A silicone resin of the formula |
| | (R¹SiO_{3/2})_{0.80}(R¹₂SiO_{2/2})_{0.20}(R²O_{1/2})_{0.21}, wherein R¹ represents methyl groups (100 mol%) and R² represents hydrogen atoms (60 mol%) and methyl groups (40 mol%); the resin has a weight-average molecular weight of 3,000, a softening point of 70°C and is a solid at 25°C |
| Silicone resin (A-10): | A silicone resin of the formula |
| | (R¹SiO_{3/2})_{0.60}(R¹₂SiO_{2/2})_{0.40}(R²O_{1/2})_{0.21}, wherein R¹ represents methyl groups (100 mol%) and R² represents hydrogen atoms (60 mol%) and methyl groups (40 mol%); the resin has a weight-average molecular weight of 3,000, a softening point of 60°C and is a solid at 25°C |
| Stearic acid: | Industrial grade stearic acid (Kao Corporation) |
| Antioxidant: | Nocrac 6C (Ouchi Shinko Chemical Industries Co., Ltd.) |
| Resin: | T-REZ RA-100 (ENEOS Corporation) |
| Wax: | Ozoace-0355 (Nippon Seiro Co., Ltd.) |
| Zinc oxide: | Zinc white #3 (Mitsui Mining & Smelting Co., Ltd.) |
| Vulcanization accelerator (a): | Nocceler DM-P (Ouchi Shinko Chemical Industries, Co., Ltd.) |
| Vulcanization accelerator (b): | Nocceler CZ-G (Ouchi Shinko Chemical Industries, Co., Ltd.) |
| Sulfur: | 5% oil-treated sulfur (Hosoi Chemical Industry Co., Ltd.) |

The unvulcanized properties and vulcanized properties of the rubber compositions obtained in Examples 1-1 to 1-6 and Comparative Examples 1-1 to 1-5 were measured by the following methods. The results are presented in Table 1. For measurement of the vulcanized properties, the rubber compositions obtained were pressed (145°C, 30 minutes) to produce vulcanized rubber sheets.

### [Unvulcanized Properties]

### (1) Mooney Viscosity

Measured in accordance with JIS K 6300-1: 2013 after allowing 1 minute for sample to reach thermal equilibrium with viscometer; measurement was carried out for 4 minutes at 130°C. The results are expressed as indices relative to an arbitrary value of 100 for the result obtained in Comparative Example 1-1. A smaller index value indicates a lower Mooney viscosity and thus better processability.

### [Vulcanized Properties]

### (2) Hardness

The durometer (type A) hardness was measured in accordance with JIS K 6253-3: 2012. The results are expressed as indices relative to an arbitrary value of 100 for the result obtained in Comparative Example 1-1. A larger index value indicates a higher hardness, which is better.

### (3) Tensile Property

A JIS No. 3 dumbbell-shaped test specimen was die-cut from the rubber composition, a tensile test was carried out on the specimen in accordance with JIS K 6251 at a test rate of 500 mm/min, and the 300% modulus (M₃₀₀) [MPa] was measured at room temperature. The results are expressed as indices relative to an arbitrary value of 100 for the result obtained in Comparative Example 1-1. A larger index value indicates a higher modulus and thus better tensile properties.

### (4) Dynamic Viscoelasticity (Temperature Dispersion)

Measurement was carried out at 1% dynamic strain under tension and a frequency of 55 Hz using a viscoelasticity tester (Metravib). The test specimen used was a sheet having a thickness of 0.2 cm and a width of 0.5 cm, the clamping interval was set to 2 cm and the initial load was set to 1 N. The tan δ (60°C) values are expressed as indices relative to an arbitrary value of 100 for the result obtained in Comparative Example 1-1. A smaller index value for tan δ (60°C) indicates a better rolling resistance.

### (5) Wear Resistance

Testing was carried out using an FPS tester (Ueshima Seisakusho Co., Ltd.) at a sample speed of 200 m/min, a load of 20 N, a road surface temperature of 30°C and slip ratios of 5% and 20%. The results obtained are expressed as indices relative to an arbitrary value of 100 for the result obtained in Comparative Example 1-1. A larger index value indicates a smaller amount of wear and thus better wear resistance.

### (6) Durability (Time to Failure)

Testing was carried out using a Flexometer (Ueshima Seisakusho Co., Ltd.) under the following conditions: a static load of 60 N, a dynamic displacement of 5.5 mm, a frequency of 45 Hz and a tank temperature of 100°C. The time until the rubber test specimen fails is expressed as an index relative to an arbitrary value of 100 for the result obtained in Comparative Example 1-1. A larger index value indicates a longer time until failure and thus higher durability.

**[Table 1]**

| | | Example | | | | | | Comparative Example | | | | |
|---|---|---|---|---|---|---|---|---|---|---|---|---|
| | | 1-1 | 1-2 | 1-3 | 1-4 | 1-5 | 1-6 | 1-1 | 1-2 | 1-3 | 1-4 | 1-5 |
| (C) Natural rubber | | 100 | 100 | 100 | 100 | 100 | 100 | 100 | 100 | 100 | 100 | 100 |
| (D) Carbon black | | 20 | 20 | 20 | 20 | 20 | 20 | 20 | 20 | 20 | 20 | 20 |
| (D) Silica | | 30 | 30 | 30 | 30 | 30 | 30 | 30 | 30 | 30 | 30 | 30 |
| (B) Sulfide silane | | 2.4 | 2.4 | 2.4 | 2.4 | 2.4 | 2.4 | 2.4 | 2.4 | 2.4 | 2.4 | 2.4 |
| (A) Silicone resin | (A-1) | 3 | | | | | | | | | | |
| | (A-2) | | 3 | | | | | | | | | |
| | (A-3) | | | 3 | | | | | | | | |
| | (A-4) | | | | 3 | | | | | | | |
| | (A-5) | | | | | | | | 3 | | | |
| | (A-6) | | | | | | | | | 3 | | |
| | (A-7) | | | | | | | | | | 3 | |
| | (A-8) | | | | | | | | | | | 3 |
| | (A-9) | | | | | 3 | | | | | | |
| | (A-10) | | | | | | 3 | | | | | |
| Stearic acid | | 2 | 2 | 2 | 2 | 2 | 2 | 2 | 2 | 2 | 2 | 2 |
| Antioxidant | | 2 | 2 | 2 | 2 | 2 | 2 | 2 | 2 | 2 | 2 | 2 |
| Resin | | 1 | 1 | 1 | 1 | 1 | 1 | 1 | 1 | 1 | 1 | 1 |
| Wax | | 1 | 1 | 1 | 1 | 1 | 1 | 1 | 1 | 1 | 1 | 1 |
| Zinc oxide | | 2.5 | 2.5 | 2.5 | 2.5 | 2.5 | 2.5 | 2.5 | 2.5 | 2.5 | 2.5 | 2.5 |
| Vulcanization accelerator (a) | | 0.3 | 0.3 | 0.3 | 0.3 | 0.3 | 0.3 | 0.3 | 0.3 | 0.3 | 0.3 | 0.3 |
| Vulcanization accelerator (b) | | 1.0 | 1.0 | 1.0 | 1.0 | 1.0 | 1.0 | 1.0 | 1.0 | 1.0 | 1.0 | 1.0 |
| Sulfur | | 1.0 | 1.0 | 1.0 | 1.0 | 1.0 | 1.0 | 1.0 | 1.0 | 1.0 | 1.0 | 1.0 |

| [Unvulcanized Properties] | | | | | | | | | | | | |
|---|---|---|---|---|---|---|---|---|---|---|---|---|
| Mooney viscosity | | 95 | 96 | 98 | 98 | 96 | 96 | 100 | 98 | 98 | 98 | 99 |

| [Vulcanized Properties] | | | | | | | | | | | | |
|---|---|---|---|---|---|---|---|---|---|---|---|---|
| Hardness | | 110 | 109 | 109 | 106 | 109 | 109 | 100 | 103 | 103 | 103 | 101 |
| Tensile properties M100 | | 145 | 140 | 140 | 130 | 143 | 140 | 100 | 115 | 115 | 115 | 105 |
| Dynamic viscoelasticity tan δ (0°C) | | 102 | 103 | 102 | 102 | 101 | 101 | 100 | 98 | 97 | 98 | 100 |
| Dynamic viscoelasticity tan δ (60°C) | | 92 | 94 | 95 | 96 | 92 | 92 | 100 | 100 | 102 | 100 | 100 |
| Wear resistance (slip ratio, 5%) | | 100 | 100 | 101 | 101 | 100 | 100 | 100 | 100 | 101 | 100 | 100 |
| Wear resistance (slip ratio, 20%) | | 100 | 100 | 100 | 100 | 100 | 100 | 100 | 100 | 100 | 100 | 100 |
| Durability (time to failure) | | 200 | 190 | 190 | 170 | 200 | 190 | 100 | 125 | 125 | 130 | 100 |

As is apparent from Table 1, compared with the vulcanized rubber compositions obtained in Comparative Examples 1-1 to 1-5, the vulcanized rubber compositions obtained in Examples 1-1 to 1-6 have improved hardness, tensile properties and durability while maintaining the same level of wear resistance.

### [Examples 2-1 to 2-6, Comparative Examples 2-1 to 2-5]

The SBR and BR shown in Table 2 were kneaded for 30 seconds using a four-liter internal mixer (MIXTRON, from Kobe Steel, Ltd.).

Next, the oil ingredient, carbon black, silica, sulfide silane, silicone resin, stearic acid, antioxidant and wax shown in Table 2 were added and the internal temperature was raised to 150°C and held at 150°C for 2 minutes, following which the contents of the mixer were discharged. This material was then stretched using rolls. The resulting rubber was again kneaded using an internal mixer (MIXTRON, from Kobe Steel, Ltd.) until the internal temperature reached 140°C and then discharged, following which it was stretched using rolls.

The zinc oxide, vulcanization accelerator and sulfur shown in Table 2 were then added and kneading was carried out, giving the rubber composition.

| | |
|---|---|
| SBR: | SLR-4602 (from Trinseo) |
| BR: | BR-01 (JSR Corporation) |
| Oil: | AC-12 (Idemitsu Kosan Co., Ltd.) |
| Carbon black: | Seast 3 (Tokai Carbon Co., Ltd.) |
| Silica: | Nipsil AQ (Tosoh Silica Corporation) |
| Sulfide silane: | KBE-846 (Shin-Etsu Chemical Co., Ltd.; bis(triethoxysilylpropyl)tetrasulfide) |
| Silicone resin (A-1): | A silicone resin of the formula (R¹SiO_{3/2})_{1.00}(R²O_{1/2})_{0.21}, wherein R¹ represents methyl groups (100 mol%) and R² represents hydrogen atoms (60 mol%) and methyl groups (40 mol%); the resin has a weight-average molecular weight of 3,000, a softening point of 75°C and is a solid at 25°C |
| Silicone resin (A-2): | A silicone resin of the formula (R¹SiO_{3/2})_{1.00}(R²O_{1/2})_{0.12}, wherein R¹ represents methyl groups (80 mol%) and phenyl groups (20 mol%) and R² represents hydrogen atoms (60 mol%) and methyl groups (40 mol%); the resin has a weight-average molecular weight of 3,500, a softening point of 77°C and is a solid at 25°C |
| Silicone resin (A-3): | A silicone resin of the formula (R¹SiO_{3/2})_{1.00}(R²O_{1/2})_{0.12}, wherein R¹ represents methyl groups (80 mol%) and n-propyl groups (20 mol%) and R² represents hydrogen atoms (60 mol%) and methyl groups (40 mol%); the resin has a weight-average molecular weight of 3,500, a softening point of 77°C and is a solid at 25°C |
| Silicone resin (A-4): | A silicone resin of the formula (R¹SiO_{3/2})_{1.00}(R²O_{1/2})_{0.12}, wherein R¹ represents methyl groups (60 mol%) and phenyl groups (40 mol%) and R² represents hydrogen atoms (60 mol%) and methyl groups (40 mol%); the resin has a weight-average molecular weight of 3,700, a softening point of 79°C and is a solid at 25°C |
| Silicone resin (A-5): | A silicone resin of the formula (R¹SiO_{3/2})_{1.00}(R²O_{1/2})_{0.12}, wherein R¹ represents methyl groups (40 mol%) and phenyl groups (60 mol%) and R² represents hydrogen atoms (60 mol%) and methyl groups (40 mol%); the resin has a weight-average molecular weight of 3,700, a softening point of 79°C and is a solid at 25°C |
| Silicone resin (A-6): | A silicone resin of the formula (R¹SiO_{3/2})_{1.00}(R²O_{1/2})_{0.61}, wherein R¹ represents phenyl groups (70 mol%) and n-propyl groups (30 mol%) and R² represents hydrogen atoms (60 mol%) and methyl groups (40 mol%); the resin has a weight-average molecular weight of 4,500, a softening point of 75°C and is a solid at 25°C |
| Silicone resin (A-7): | A silicone resin of the formula (R¹SiO_{3/2})_{1.00}(R²O_{1/2})_{0.12}, wherein R¹ represents n-propyl groups (100 mol%) and R² represents hydrogen atoms (60 mol%) and methyl groups (40 mol%); the resin has a weight-average molecular weight of 3,000, a softening point of 70°C and is a solid at 25°C |
| Silicone resin (A-8): | A silicone resin of the formula (R¹SiO_{3/2})_{1.00}(R²O_{1/2})_{0.12}, wherein R¹ represents methyl groups (80 mol%) and phenyl groups (20 mol%) and R² represents hydrogen atoms (10 mol%) and methyl groups (90 mol%); the resin has a weight-average molecular weight of 3,500, a softening point of 77°C and is a solid at 25°C |
| Silicone resin (A-9): | A silicone resin of the formula |
| | (R¹SiO_{3/2})_{0.80}(R¹₂SiO_{2/2})_{0.20}(R²O_{1/2})_{0.21}, wherein R¹ represents methyl groups (100 mol%) and R² represents hydrogen atoms (60 mol%) and methyl groups (40 mol%); the resin has a weight-average molecular weight of 3,000, a softening point of 70°C and is a solid at 25°C |
| Silicone resin (A-10): | A silicone resin of the formula |
| | (R¹SiO_{3/2})_{0.60}(R¹₂SiO_{2/2})_{0.40}(R²O_{1/2})_{0.21}, wherein R¹ represents methyl groups (100 mol%) and R² represents hydrogen atoms (60 mol%) and methyl groups (40 mol%); the resin has a weight-average molecular weight of 3,000, a softening point of 60°C and is a solid at 25°C |
| Stearic acid: | Industrial grade stearic acid (Kao Corporation) |
| Antioxidant: | Nocrac 6C (Ouchi Shinko Chemical Industries Co., Ltd.) |
| Wax: | Ozoace-0355 (Nippon Seiro Co., Ltd.) |
| Zinc oxide: | Zinc white #3 (Mitsui Mining & Smelting Co., Ltd.) |
| Vulcanization accelerator (a): | Nocceler D (Ouchi Shinko Chemical Industries, Co., Ltd.) |
| Vulcanization accelerator (b): | Nocceler DM-P (Ouchi Shinko Chemical Industries, Co., Ltd.) |
| Vulcanization accelerator (c): | Nocceler CZ-G (Ouchi Shinko Chemical Industries, Co., Ltd.) |
| Sulfur: | 5% oil-treated sulfur (Hosoi Chemical Industry Co., Ltd.) |

The unvulcanized properties and vulcanized properties of the rubber compositions obtained in Examples 2-1 to 2-6 and Comparative Examples 2-1 to 2-5 were measured by the following methods. The results are presented in Table 2. For measurement of the vulcanized properties, the rubber compositions obtained were pressed (160°C, 10 to 40 minutes) to produce vulcanized rubber sheets (thickness, 2 mm).

### [Unvulcanized Properties]

### (1) Mooney Viscosity

Measured in accordance with JIS K 6300-1: 2013 after allowing 1 minute for sample to reach thermal equilibrium with viscometer; measurement was carried out for 4 minutes at 130°C. The results are expressed as indices relative to an arbitrary value of 100 for the result obtained in Comparative Example 2-1. A smaller index value indicates a lower Mooney viscosity and thus better processability.

### (2) Vulcanization Properties (T90)

The rate of vulcanization at 160°C was measured using a rotorless rheometer, the minimum torque ML and maximum torque MH were determined from the vulcanization curve, and T90 (the time in minutes it takes to reach a torque value that is 90% of the maximum torque) was determined. The results are expressed as indices relative to an arbitrary value of 100 for the result obtained in Comparative Example 2-1. A smaller index value indicates a more rapid rate of vulcanization and thus excellent productivity.

### [Vulcanized Properties]

### (3) Hardness

The durometer (type A) hardness was measured in accordance with JIS K 6253-3: 2012. The results are expressed as indices relative to an arbitrary value of 100 for the result obtained in Comparative Example 2-1. A larger index value indicates a higher hardness, which is better.

### (4) Tensile Property

A JIS No. 3 dumbbell-shaped test specimen was die-cut from the rubber composition, a tensile test was carried out on the specimen in accordance with JIS K 6251 at a test rate of 500 mm/min, and the 300% modulus (M₃₀₀) [MPa] was measured at room temperature. The results are expressed as indices relative to an arbitrary value of 100 for the result obtained in Comparative Example 2-1. A larger index value indicates a higher modulus and thus better tensile properties.

### (5) Dynamic Viscoelasticity (Temperature Dispersion)

Measurement was carried out at 1% dynamic strain under tension and a frequency of 55 Hz using a viscoelasticity tester (Metravib). The test specimen used was a sheet having a thickness of 0.2 cm and a width of 0.5 cm, the clamping interval was set to 2 cm and the initial load was set to 1 N.

The tan δ (0°C) and tan δ (60°C) values are expressed as indices relative to arbitrary values of 100 for the results obtained in Comparative Example 2-1. A larger index value for tan δ (0°C) indicates a better wet grip. A smaller index value for tan δ (60°C) indicates a better rolling resistance.

### (6) Wear Resistance

Testing was carried out using an FPS tester (Ueshima Seisakusho Co., Ltd.) at a sample speed of 200 m/min, a load of 20 N, a road surface temperature of 30°C and slip ratios of 5% and 20%. The results obtained are expressed as indices relative to arbitrary values of 100 for the results obtained in Comparative Example 2-1. A larger index value indicates a smaller amount of wear and thus better wear resistance.

### [Unvulcanized Properties]

### (1) Mooney Viscosity

Measured in accordance with JIS K 6300-1: 2013 after allowing 1 minute for sample to reach thermal equilibrium with viscometer; measurement was carried out for 4 minutes at 130°C. The results are expressed as indices relative to an arbitrary value of 100 for the result obtained in Comparative Example 2-1. A smaller index value indicates a lower Mooney viscosity and thus better processability.

### [Vulcanized Properties]

### (2) Hardness

The durometer (type A) hardness was measured in accordance with JIS K 6253-3: 2012. The results are expressed as indices relative to an arbitrary value of 100 for the result obtained in Comparative Example 2-1. A larger index value indicates a higher hardness, which is better.

### (3) Tensile Property

A JIS No. 3 dumbbell-shaped test specimen was die-cut from the rubber composition, a tensile test was carried out on the specimen in accordance with JIS K 6251 at a test rate of 500 mm/min, and the 100% modulus (M₃₀₀) [MPa] was measured at room temperature. The results are expressed as indices relative to an arbitrary value of 100 for the result obtained in Comparative Example 2-1. A larger index value indicates a higher modulus and thus better tensile properties.

### (4) Dynamic Viscoelasticity (Temperature Dispersion)

Measurement was carried out at 1% dynamic strain under tension and a frequency of 55 Hz using a viscoelasticity tester (Metravib). The test specimen used was a sheet having a thickness of 0.2 cm and a width of 0.5 cm, the clamping interval was set to 2 cm and the initial load was set to 1 N.

The tan δ (0°C) and tan δ (60°C) values are expressed as indices relative to arbitrary values of 100 for the results obtained in Comparative Example 2-1. A larger index value for tan δ (0°C) indicates a better wet grip. A smaller index value for tan δ (60°C) indicates a better rolling resistance.

### (5) Wear Resistance

Testing was carried out using an FPS tester (Ueshima Seisakusho Co., Ltd.) at a sample speed of 200 m/min, a load of 20 N, a road surface temperature of 30°C and slip ratios of 5% and 20%. The results obtained are expressed as indices relative to arbitrary values of 100 for the results obtained in Comparative Example 2-1. A larger index value indicates a smaller amount of wear and thus better wear resistance.

### (6) Durability (Creep Ratio)

Testing was carried out using a Flexometer (Ueshima Seisakusho Co., Ltd.) under the following conditions: a static load of 60 N, a dynamic displacement of 5.5 mm, a frequency of 45 Hz and a tank temperature of 100°C. The creep ratio (%) after 15 minutes was measured. The results obtained are expressed as indices relative to an arbitrary value of 100 for the result obtained in Comparative Example 2-1. A smaller index value indicates higher durability.

**[Table 2]**

| Blending Amount (parts by weight) | | Example | | | | | | Comparative Example | | | | |
|---|---|---|---|---|---|---|---|---|---|---|---|---|
| | | 2-1 | 2-2 | 2-3 | 2-4 | 2-5 | 2-6 | 2-1 | 2-2 | 2-3 | 2-4 | 2-5 |
| (C) SBR | | 80 | 80 | 80 | 80 | 80 | 80 | 80 | 80 | 80 | 80 | 80 |
| (C) BR | | 20 | 20 | 20 | 20 | 20 | 20 | 20 | 20 | 20 | 20 | 20 |
| Oil | | 30 | 30 | 30 | 30 | 30 | 30 | 30 | 30 | 30 | 30 | 30 |
| (D) Carbon black | | 5 | 5 | 5 | 5 | 5 | 5 | 5 | 5 | 5 | 5 | 5 |
| (D) Silica | | 80 | 80 | 80 | 80 | 80 | 80 | 80 | 80 | 80 | 80 | 80 |
| (B) Sulfide silane | | 6.4 | 6.4 | 6.4 | 6.4 | 6.4 | 6.4 | 6.4 | 6.4 | 6.4 | 6.4 | 6.4 |
| (A) Silicone resin | (A-1) | 3.0 | | | | | | | | | | |
| | (A-2) | | 3.0 | | | | | | | | | |
| | (A-3) | | | 3.0 | | | | | | | | |
| | (A-4) | | | | 3.0 | | | | | | | |
| | (A-5) | | | | | | | | 3.0 | | | |
| | (A-6) | | | | | | | | | 3.0 | | |
| | (A-7) | | | | | | | | | | 3.0 | |
| | (A-8) | | | | | | | | | | | 3.0 |
| | (A-9) | | | | | 3.0 | | | | | | |
| | (A-10) | | | | | | 3.0 | | | | | |
| Stearic acid | | 2 | 2 | 2 | 2 | 2 | 2 | 2 | 2 | 2 | 2 | 2 |
| Antioxidant | | 2 | 2 | 2 | 2 | 2 | 2 | 2 | 2 | 2 | 2 | 2 |
| Wax | | 1 | 1 | 1 | 1 | 1 | 1 | 1 | 1 | 1 | 1 | 1 |
| Zinc oxide | | 2.5 | 2.5 | 2.5 | 2.5 | 2.5 | 2.5 | 2.5 | 2.5 | 2.5 | 2.5 | 2.5 |
| Vulcanization accelerator (a) | | 1 | 1 | 1 | 1 | 1 | 1 | 1 | 1 | 1 | 1 | 1 |
| Vulcanization accelerator (b) | | 0.3 | 0.3 | 0.3 | 0.3 | 0.3 | 0.3 | 0.3 | 0.3 | 0.3 | 0.3 | 0.3 |
| Vulcanization accelerator (c) | | 1.5 | 1.5 | 1.5 | 1.5 | 1.5 | 1.5 | 1.5 | 1.5 | 1.5 | 1.5 | 1.5 |
| Sulfur | | 2 | 2 | 2 | 2 | 2 | 2 | 2 | 2 | 2 | 2 | 2 |

| [Unvulcanized Properties] | | | | | | | | | | | | |
|---|---|---|---|---|---|---|---|---|---|---|---|---|
| Mooney viscosity | | 95 | 95 | 96 | 96 | 95 | 95 | 100 | 98 | 99 | 99 | 100 |

| [Vulcanized Properties] | | | | | | | | | | | | |
|---|---|---|---|---|---|---|---|---|---|---|---|---|
| Hardness | | 115 | 114 | 113 | 112 | 115 | 114 | 100 | 105 | 104 | 106 | 101 |
| Tensile properties M100 | | 145 | 140 | 140 | 135 | 145 | 142 | 100 | 110 | 110 | 110 | 105 |
| Dynamic viscoelasticity tan δ (0°C) | | 100 | 100 | 100 | 100 | 100 | 100 | 100 | 100 | 100 | 100 | 100 |
| Dynamic viscoelasticity tan δ (60°C) | | 98 | 98 | 98 | 98 | 98 | 98 | 100 | 100 | 100 | 100 | 100 |
| Wear resistance (slip ratio, 5%) | | 100 | 101 | 101 | 101 | 100 | 100 | 100 | 100 | 100 | 100 | 100 |
| Wear resistance (slip ratio, 20%) | | 100 | 101 | 101 | 101 | 100 | 100 | 100 | 100 | 100 | 100 | 100 |
| Durability (15 minute creep ratio) | | 80 | 80 | 80 | 80 | 80 | 80 | 100 | 98 | 98 | 97 | 100 |

As is apparent from Table 2, compared with the vulcanized rubber compositions obtained in Comparative Examples 2-1 to 2-5, the vulcanized rubber compositions obtained in Examples 2-1 to 2-6 have greatly improved hardness, tensile properties and durability while maintaining the same level of wear resistance.

## Claims

1. A compounding ingredient for diene rubber, comprising (A) a silicone resin of formula (1) below
(SiO_{4/2})ₐ(R¹SiO_{3/2})_{b}(R¹₂SiO_{2/2})_{c}(R¹₃SiO_{1/2})_{d}(R²O_{1/2})ₑ (1)
(wherein each R¹ is independently a hydrogen atom or an alkyl group of 1 to 8 carbon atoms, aralkyl group or aryl group which may be substituted with a halogen atom, at least 50 mol% of the occurrences of R¹ being methyl groups; R² is a hydrogen atom, methyl group, ethyl group, n-propyl group, i-propyl group or acetyl group, at least 20 mol% of the occurrences of R² being hydrogen atoms; a, b, c and d are numbers which satisfy the conditions 0 ≤ a < 1, 0 < b ≤ 1, 0 ≤ c < 1, 0 ≤ d < 1 and a+b+c+d = 1; and e is a number which satisfies the condition 0 < e ≤ 2).

2. The diene rubber compounding ingredient of claim 1, wherein b is a number which satisfies the condition 0.4 ≤ b ≤ 1.

3. The diene rubber compounding ingredient of claim 2, wherein b is 1.

4. The diene rubber compounding ingredient of claim 1, wherein the silicone resin is a solid at 25°C.

5. The diene rubber compounding ingredient of any one of claims 1 to 4, further comprising (B) an organosilicon compound having one or more type of group selected from polysulfide, thioester and mercapto groups, and having an alkoxysilyl group.

6. A rubber composition comprising:
(A) a silicone resin of formula (1) below
(SiO_{4/2})ₐ(R¹SiO_{3/2})_{b}(R¹₂SiO_{2/2})_{c}(R¹₃SiO_{1/2})_{d}(R²O_{1/2})ₑ (1)
(wherein each R¹ is independently a hydrogen atom or an alkyl group of 1 to 8 carbon atoms, aralkyl group or aryl group which may be substituted with a halogen atom, with at least 50 mol% of the occurrences of R¹ being methyl groups; R² is a hydrogen atom, methyl group, ethyl group, n-propyl group, i-propyl group or acetyl group, with at least 20 mol% of the occurrences of R² being hydrogen atoms; a, b, c and d are numbers which satisfy the conditions 0 ≤ a < 1, 0 < b ≤ 1, 0 ≤ c < 1, 0 ≤ d < 1 and a+b+c+d = 1; and e is a number which satisfies the condition 0 < e ≤ 2),
(B) an organosilicon compound having one or more type of group selected from polysulfide, thioester and mercapto groups, and having an alkoxysilyl group,
(C) a diene rubber, and
(D) an inorganic filler.

7. A tire obtained by molding the rubber composition of claim 6.
